# DEMANDE DE BREVET EUROPEEN

(11) **EP 2 112 645 A1**
(43) Date de publication de la demande: **28.10.2009**
(21) Numéro de dépôt: 09157664.5
(22) Date de dépôt: 08.04.2009
(51) Int. Cl.: G09B 23/28

(54) **Modèle anatomique de mâchoire humaine pour chirurgie ou implantologie**

(30) Priorité: 08.04.2008 FR 0852331
(71) Demandeur: SABIN, Emmanuel, 56250 La Vraie Croix (FR)
(72) Inventeur: SABIN, Emmanuel, 56250 La Vraie Croix (FR)
(74) Mandataire: Pontet, Bernard

(57) **Abrégé**

La présente invention concerne dispositif d'entraînement médical ou dentaire simulant une partie du corps comprenant une surface osseuse sous-jacente à une peau ou une muqueuse, notamment une mâchoire. Ce dispositif se présente en particulier sous la forme d'un modèle de mâchoire présentant une ou plusieurs zones dite de travail et comprenant une structure de base simulant l'os et recouverte par une couche souple simulant des tissus mous et présentant une surface extérieure accessible à des moyens chirurgicaux. Ce dispositif comprend des moyens pour injecter entre la structure de base et la couche souple un liquide sous pression simulant un fluide biologique.

Elle concerne en outre un procédé de réalisation d'un outillage pour l'obtention d'un tel modèle d'entraînement, à partir d'un modèle à la forme extérieure complète dont on tire un moule avant de réduire ce modèle par enlèvement de matière dans les zones devant être recouvertes d'une couche souple.

## Description

La présente invention concerne dispositif d'entraînement médical ou dentaire simulant une partie du corps comprenant une surface osseuse sous-jacente à une peau ou une muqueuse, notamment une mâchoire. Ce dispositif se présente en particulier sous la forme d'un modèle de mâchoire présentant une ou plusieurs zones dite de travail et comprenant une structure de base simulant l'os et recouverte par une couche souple simulant des tissus mous et présentant une surface extérieure accessible à des moyens chirurgicaux. Ce dispositif comprend des moyens pour injecter entre la structure de base et la couche souple un liquide sous pression simulant un fluide biologique.

Elle concerne en outre un procédé de réalisation d'un outillage pour l'obtention d'un tel modèle d'entraînement, à partir d'un modèle à la forme extérieure complète dont on tire un moule avant de réduire ce modèle par enlèvement de matière dans les zones devant être recouvertes d'une couche souple.

Pour la formation des chirurgiens, et entre autres des chirurgiens dentistes, la question de la formation pratique et de l'entraînement est toujours un point important et délicat. En effet, une grande partie de cet entraînement ne peut pas être réalisé sur de vrais patients et en particulier les débuts. Pour cet entraînement, on cherche donc à simuler les opérations réelles sur des cadavres animaux ou humains, ou sur des modèles artificiels.

En particulier dans le domaine dentaire, et plus particulièrement pour la pose d'implants, la simulation peut se faire sur des modèles artificiels présentant la forme d'une mâchoire, supérieure (maxillaire) ou inférieure (mandibule), en un matériau dur simulant l'os et qui est recouvert d'une couche souple simulant la gencive. De telles mâchoires sont souvent consommables et peuvent en outre être fixées sur une structure représentant une tête, alors appelée « tête fantôme ». De tels produits sont vendus par exemple par la société Frasaco.

Dans le cas d'utilisation de chairs mortes, la simulation de la pose d'implant se fait actuellement, soit sur des côtes de boeuf ou de porc, soit sur des cadavres.

Ces différentes modalités ne reflètent pas complètement la réalité de l'exercice chirurgical, en particulier du point de vue du saignement, et ne permettent donc pas d'obtenir des résultats satisfaisants dans la formation des étudiants.

Certains modèles artificiels plus interactifs existent, par exemple avec un contact électrique qui permet de signaler lorsqu'une partie spécifique a été touchée, par exemple un nerf.

Le document US 2007/0178429 décrit un modèle artificiel orienté vers le traitement de dents existantes, dont le canal dentaire est relié à une arrivée de liquide sous pression qui simule un saignement lorsque ce canal dentaire est atteint par la fraise du chirurgien.

Aucun modèle ne simule actuellement de façon satisfaisante le comportement de la gencive, et en particulier les saignements se produisant lors des opérations de préparation pour la pose d'un implant.

Un but de l'invention est d'améliorer le rendu des conditions d'entraînement dans une opération de chirurgie sur base osseuse, par exemple en chirurgie dentaire et plus particulièrement en implantologie, et possiblement types de chirurgie telles que sur des zones crâniennes ou faciales.

Plus particulièrement, l'invention cherche à réaliser un modèle qui puisse simuler la muqueuse et le périoste, et aussi reproduire les phénomènes d'irrigation pour qu'au moment de l'incision le modèle saigne comme une muqueuse que l'on incise.

L'invention cherche à fournir un procédé simple et économique pour la réalisation d'un tel modèle didactique.

### Modèle didactique

Pour cela, l'invention propose un dispositif didactique ou d'entraînement médical ou dentaire simulant une partie du corps comprenant une surface osseuse sous-jacente à une peau ou une muqueuse, notamment une mâchoire. Ce dispositif présente une ou plusieurs zones dites de travail comprenant une structure de base recouverte par une couche souple présentant une surface extérieure accessible à des moyens chirurgicaux.

Selon l'invention, le dispositif comprend des moyens pour injecter entre la structure de base et la couche souple un liquide sous pression simulant un fluide biologique.

Plus particulièrement, les moyens d'injection comprennent un canal inclus dans la structure de base et aboutissant dans la zone de travail entre la structure de base et la couche souple, dans une zone où lesdites couches de base et couche souple ne sont pas adhérentes l'une à l'autre.

La zone de travail est entourée de façon continue d'une zone creuse ou tranchée formée dans la structure de base et remplie par un matériau attenant à la couche souple. Cette tranchée forme ainsi une chicane d'étanchéité autour de ladite zone de travail, qui empêche toute fuite et perte de pression de ladite zone de travail vers une zone voisine non pressurisée.

Le liquide injecté est amené avec une pression relativement faible mais continue, qui sera réglée de façon à ajuster l'écoulement pour simuler un saignement réaliste.

Dans le domaine dentaire, le dispositif simule en tout ou partie la forme d'une mâchoire comprend au moins une zone de travail irriguée sous pression s'étendant à la fois sur la face intérieure et sur la face extérieure d'une structure rigide simulant la partie osseuse du bord (de la tranche) de la mâchoire. Cette zone de travail comporte au moins une couche d'un matériau souple recouvrant cette structure rigide et simulant la gencive. De préférence, cette couche souple comprend une partie traversant la structure rigide de façon à relier et maintenir entre eux au moins deux points de ladite zone de travail situés de part et d'autre de ladite structure rigide.

Plus particulièrement, la couche souple recouvrant la structure rigide comprend au moins deux couches souples de couleurs différentes ou de textures différentes recouvrant une structure rigide simulant une partie osseuse, et simulant respectivement le périoste et la muqueuse.

Optionnellement, les deux sous couches ne sont pas adhérentes entre elles dans tout ou partie de la zone de travail, formant entre elles une zone d'interface qui communique avec la structure rigide par une ou plusieurs ouvertures.

De façon avantageuse, le dispositif forme un modèle comprenant une pluralité de zones de travail étanches entre elles à la pression d'utilisation et reliées au dispositif d'arrivée de liquide sous pression.

Il est ainsi possible pour l'une desdites zones de travail d'être maintenue sous pression lorsqu'une incision a déjà provoqué un écoulement dans une autre desdites zones de travail, permettant de travailler séparément sur plusieurs zones de travail.

Cela permet aussi d'obtenir une simulation de saignement dans une zone déjà incisée, pendant que l'on travaille dans une zone voisine non encore incisée, en maintenant simultanément les deux zones de travail sous pression. Il est ainsi possible de simuler les interactions et les gênes pouvant survenir d'une zone à l'autre dans la réalité.

L'invention a donné lieu à la réalisation d'un modèle didactique qui a été réalisé et testé, et permet à l'étudiant d'être dans les conditions les plus proches d'une opération au bloc opératoire pour reproduire les bons gestes chirurgicaux.

La structure du modèle permet de reconstituer le milieu vivant d'une opération, par exemple dans la texture et les dimensions, en particulier grâce à la double couche simulant différemment la muqueuse et le périoste.

Le fonctionnement du modèle permet en outre à l'étudiant d'être confronté à des situations proches de la réalité avec des patients au cours des actes chirurgicaux. Le modèle permet ainsi un entraînement évitant les surprises par rapport aux saignements, et donnant l'occasion de pratiquer les gestes techniques et modes opératoires nécessaires au bon déroulement d'une intervention chirurgicale, par exemple les applications de compresses ou évacuations de sang et salive.

### Réalisation

L'invention propose aussi un procédé de réalisation d'un outillage pour l'obtention d'un tel modèle d'entraînement à au moins une couche de travail. Selon l'invention, le procédé comprend les étapes suivantes :
- à partir d'un modèle mâle présentant la forme extérieure dudit modèle d'entraînement à obtenir, réalisation par moulage d'un premier moule ;
- réduction par enlèvement de matière dudit modèle mâle ou d'un modèle obtenu à partir dudit premier moule, dans au moins une zone devant comporter ladite couche de travail, d'une profondeur correspondant à l'épaisseur à obtenir pour ladite couche de travail ;
- à partir dudit modèle mâle réduit, réalisation par moulage d'un deuxième moule ; de façon à ce que la forme dudit premier moule puisse coopérer avec la forme dudit modèle mâle réduit une fois pour former un volume de moulage permettant de réaliser ladite couche de travail.

Pour l'obtention d'un modèle d'entraînement à au moins deux couches de travail, dites extérieure et intérieure, le procédé selon l'invention comprend en outre les étapes suivantes :
- réduction par enlèvement de matière du modèle mâle réduit une fois ou d'un modèle obtenu à partir du deuxième moule, dans au moins une zone devant comporter une couche intérieure, d'une profondeur correspondant à l'épaisseur à obtenir pour ladite couche intérieure ;
- à partir dudit modèle mâle réduit deux fois, réalisation par moulage d'un troisième moule ; de façon à ce que :

- la forme dudit troisième moule permette de réaliser un modèle dit de travail ; et
- la forme dudit deuxième moule puisse coopérer avec la forme dudit modèle de travail pour former un volume de moulage permettant de réaliser ladite couche intérieure ; et
- la forme du premier moule puisse alors coopérer avec la forme dudit modèle mâle réduit une fois ou avec un modèle de travail portant ladite couche intérieure pour former un volume de moulage permettant de réaliser une couche de travail dite extérieure.

Plus particulièrement, l'étape de réduction du modèle réduit une fois en un modèle réduit deux fois comprend en outre :
- une gravure d'au moins une tranchée entourant de façon continue au moins une zone de travail destinée à être mise sous pression de liquide, ladite tranchée réalisant lors du moulage de la couche intérieure une chicane d'étanchéité autour de ladite zone de travail ; et
- au moins un perçage traversant le modèle de travail de part en part et se rejoignant en deux points de ladite zone de travail, ledit perçage réalisant lors du moulage de la couche intérieure une partie traversante maintenant ladite couche intérieure plaquée contre le modèle de travail.

De préférence, au moins un perçage relie deux points de la même tranchée d'étanchéité.

Lors de l'injection du matériau formant la couche intérieur, le matériau remplissant ce perçage réalisera alors un lien entre les deux côtés de la structure rigide. La couche intérieure sera ainsi maintenue fermement plaquée contre la structure rigide, ce qui concoure à la bonne étanchéité autour de la zone. Ce maintien fournit aussi un meilleur maintien global des couches souples sous la pression, ce qui améliore le réalisme de la simulation.

Dans le mode préféré de l'invention, le procédé comprend en outre une étape de fixation au sein du troisième moule d'au moins un fil relié à une extrémité à la surface d'au moins une zone de travail, et dont l'autre extrémité est insérée à l'intérieur d'une extrémité d'un tuyau. L'autre extrémité de ce tuyau sort de ce troisième moule par une surface externe dite arrière située en dehors des zones de travail. Ce tuyau est ainsi noyé dans le modèle de travail lors de la coulée et forme ainsi un conduit d'apport de liquide à cette zone de travail après retrait de ce fil.

On réalise ainsi simplement plusieurs canaux fins qui peuvent être bien séparés si besoin.

D'autres particularités et avantages de l'invention ressortiront de la description détaillée d'un mode de mise en oeuvre nullement limitatif, et des dessins annexés sur lesquels :
- la FIGURE 1 illustre un exemple de modèle dentaire d'implantologie selon le mode de réalisation préféré de l'invention, dans une vue en perspective ;
- la FIGURE 2 est une vue du dessus du même modèle ;
- la FIGURE 3 est une vue en coupe transversale selon AA dans une tranchée d'étanchéité entre deux zones de travail ;
- la FIGURE 4 est une vue longitudinale partielle, en coupe pour les couches souples selon BB ;
- la FIGURE 5 est une vue en coupe transversale selon CC dans une zone de travail ;

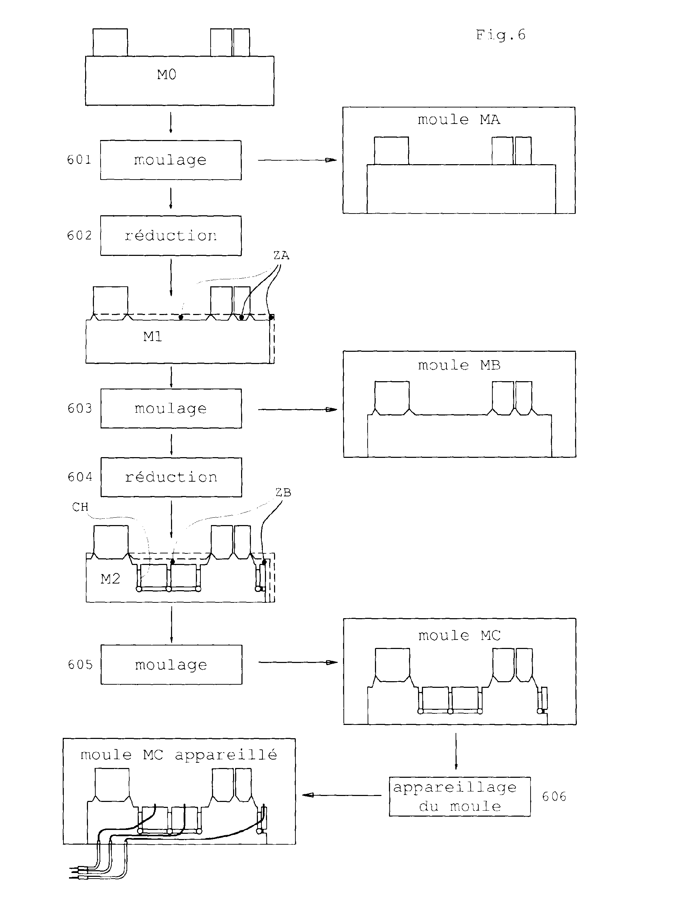

- la FIGURE 6 est un schéma illustrant la réalisation des moules pour l'obtention d'un tel modèle ;
- la FIGURE 7 est un schéma illustrant la réalisation du modèle à partir de tels moules.

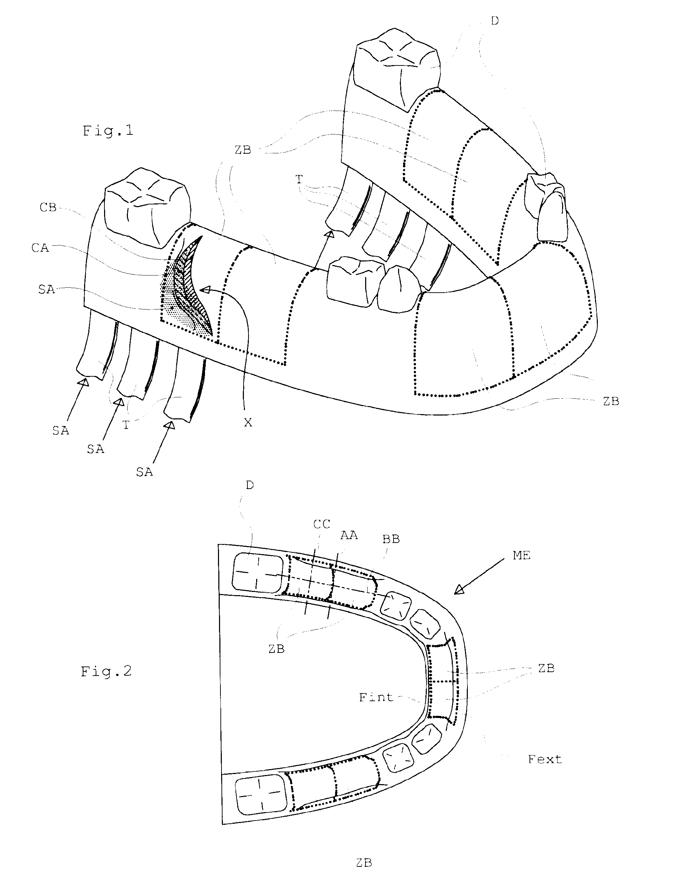

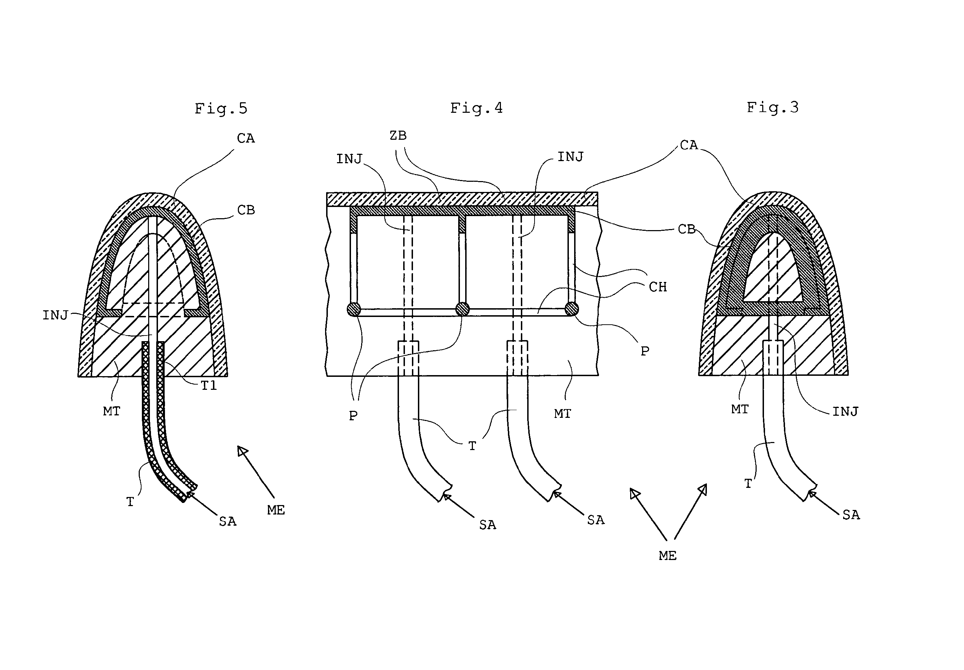

Dispositif selon l'invention : illustré en FIGURE 1 à FIGURE 5

L'os du modèle didactique est simulé par de la résine formant la structure rigide de base MT. Cette résine est traversée par des multiples canaux miniaturisés qui permettent de faire circuler le sang dans le modèle, entre la surface extérieur de l'os et la première couche CB de tissu. Le périoste, qui entoure l'os, est simulé par cette première couche CB de silicone très fine, réalisée par injection et non adhérente à la résine (en tout cas dans les zones de travail).

Au dessus de cette première couche CB, une deuxième couche CA de silicone simulant la muqueuse proprement dite, vient envelopper le silicone de la première couche CB du modèle didactique de façon adhérente. La couleur du silicone à chaque fois différente permet un meilleur repère visuel : la deuxième couche CA (extérieure) est un silicone rose qui représente la muqueuse, et la première couche CB (intérieure) sous cette muqueuse est en un silicone nacré qui est représente le périoste. Les silicones peuvent aussi être choisis de textures légèrement différentes.

Un circuit de liquide sous pression est connecté au modèle, par exemple par des tuyaux T, et permet grâce à une robinetterie miniaturisée (non représentée) de faire circuler un liquide, par exemple un sang artificiel SA, dans les canaux INJ traversant la structure rigide MT. Ce liquide est ainsi injecté sous une légère pression entre la surface osseuse et le périoste de la simulation. La pression est réglée suffisamment faible pour être étanchée par les chicanes CH sur le pourtour des zones de travail, et va ainsi s'écouler lentement vers l'extérieur lors d'une incision du périoste CB.

Les valeurs de pression peuvent ajustées par l'homme du métier à l'aide de quelques essais simples, par exemple à l'aide d'une poire du type utilisé pour les tensiomètres, reliée à une poche d'un liquide de couleur et viscosité proche de celle du sang. Il suffit de réaliser une incision dans une zone de travail et de faire varier la pression pour déterminer à quelle pression l'écoulement est le plus réaliste.

Des pressions situées entre 0,5 bar et 1 bar ont donné des résultats satisfaisants pour des tranchées d'étanchéité d'une profondeur entre 1 mm et 2 mm, sur un modèle réalisé avec les matériaux cités plus loin et selon les normes de précision classiques pour le travail d'un artisan prothésiste.

Le modèle didactique est constitué de six compartiments étanches, permettant ainsi six poses d'implants pour chaque exemplaire consommable du modèle. Il est à noter que la structure rigide peut être réutilisée pour réaliser un nouveau modèle didactique.

Lorsque l'on travaille sur une zone ou un secteur dentaire précis du modèle pour mettre un implant, seul le compartiment incisé et percé pour la pose de l'implant a besoin d'être irrigué, les autres secteurs sont fermés. Pour opérer un autre secteur, on ferme celui qui a été opéré et on ouvre celui qui va recevoir le nouvel implant. On peut fermer les circuits à volonté lorsque l'on passe d'un secteur à l'autre.

De plus, dans la réalité d'une opération, si deux implants sont placés côte à côte, le saignement du premier implant posé gêne la préparation du second. Le modèle selon l'invention permet aussi de recréer cette gêne éprouvée au cours de l'opération, en irriguant plusieurs compartiments de travail à la fois.

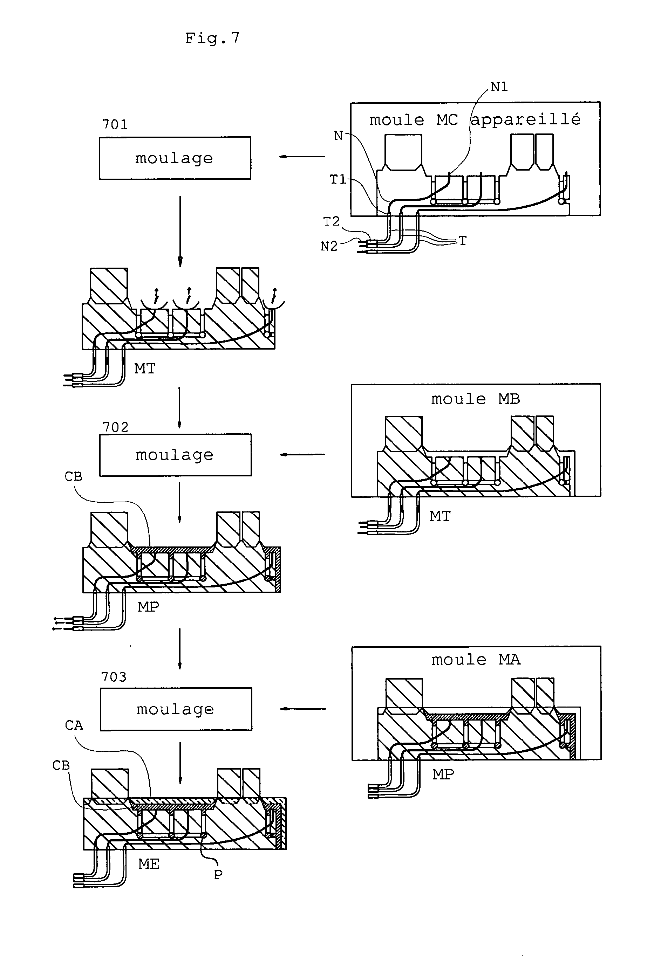

Réalisation des moules : illustrée en FIGURE 7

On part d'un maître modèle M0, par exemple en plâtre dur, qui préfigure le gabarit et la forme exacte du modèle fini. On réalise à partir de ce modèle un premier moule MA, par exemple par moulage ou avec une thermoformeuse. Un machine de ce type, par exemple la machine de marque Erkodent, permet de fabriquer aisément et à faible coût des moules de manières très rapide et en grande quantité.

Ce premier moule MA, basé sur le modèle initial M0, sera utilisé pour fabriquer la couche extérieure CA en silicone.

Une autre étape est de fabriquer une réduction M1 du maître modèle M0, en enlevant une couche de matière dans toutes les parties où l'on souhaite obtenir la couche extérieure CA qui simulera la muqueuse, et selon l'épaisseur choisie pour cette couche.

Il est intéressant de doter le modèle de quelques dents D, sur lesquelles on n'effectuera pas de réduction. En effet, avec un volume des dents du modèle réduit M1 qui est le même que le volume des dents du maître modèle M0, ces dents D servent au bon positionnement du modèle réduit M1 dans le premier moule MA.

A partir de ce modèle réduit une fois M1, on réalise un deuxième moule MB qui va servir au moulage de la première couche CB de silicone.

Sur le modèle réduit une fois M1, on pratique de nouvelles réductions par enlèvement de matière qui correspondent cette fois à une couche CB de silicone venant juste sur l'os et simulant le périoste. On obtient ainsi un modèle réduit deux fois M2.

De préférence et par souci de simplicité, ces nouvelles réductions sont seulement localisées à l'endroit où les implants seront posés : dans les zones de travail où les étudiant auront besoin de soulever la muqueuse.

A partir de ce modèle réduit deux fois M2, on réalise un troisième moule MC, par exemple en élastomère, qui servira à obtenir la structure de base (ou modèle de travail MT) du modèle complet d'entraînement ME.

Réalisation du modèle : illustrée en FIGURE 8

Chaque fois que l'on veut réaliser une structure de base MT, on commence par appareiller le troisième moule MC de façon à obtenir les canaux qui serviront à injecter le liquide dans le modèle complet ME.

Dans ce troisième moule MC, on introduit des fils de nylon à l'endroit où sont prévus les saignements, c'est à dire dans les zones de travail et à l'intérieur des chicanes d'étanchéité.

A une première extrémité N1, chaque fil de nylon peut être planté dans la surface intérieure du moule MC, et sa deuxième extrémité N2 dépasse à l'extérieur du moule.

Cette deuxième extrémité N2 est insérée à l'intérieur de la première extrémité T1 d'un tuyau T ou tube souple très fin, cette extrémité T1 étant située à l'intérieur du moule MC pour être noyée dans la structure de base lors de la coulée. De préférence, la deuxième extrémité N2 du fil dépasse à l'extérieur de la deuxième extrémité T2 du tuyau, ce qui permettra ultérieurement de retirer le fil facilement en tirant sur cette deuxième extrémité N2.

Ce sont ces tuyaux T fins qui seront connectés à un système de mise en pression, par exemple par une connexion de type « LUER-LOC » qui est standard dans le domaine du matériel médical. Ces tubes pourront alors être rempli de sang artificiel et mis sous pression préalable, provoquant ainsi immédiatement le saignement lors d'une incision.

Une fois que le troisième moule MC est appareillé, on coule la résine qui noie tout le système d'irrigation. Quand la résine a fait sa prise, la tubulure avec sa connexion « LUER-LOC » est prisonnière de la résine.

Il suffira alors ultérieurement de tirer les fils de nylon par leur deuxième extrémité N2 pour obtenir de fins canaux d'irrigation, par exemple d'un diamètre de 0,45mm. Il est préférable de ne pas retirer les fils avant la réalisation de la couche intérieure CB, pour éviter que l'orifice créé par le nylon ne soit bouché par le silicone. Par contre, les premières extrémités N1 des fils de nylon, qui dépassent de la structure de base au niveau des zones de travail, peuvent alors être coupées à ras de la résine si l'on ne souhaite pas que le liquide traverse le périoste avant l'incision.

La structure de base MT obtenue présente le même gabarit que le modèle réduit deux fois M2. Cette structure de base MT est positionnée dans le deuxième moule MB, et le silicone simulant le périoste est injecté dans l'espace restant entre moule et modèle pour former la deuxième couche CB (couche intérieure), par exemple par injection sous pression à travers des orifices prévus à cet effet dans le moule, pour bien remplir les tranchées et les perçages. On obtient ainsi une structure de base recouverte de périoste formant une structure intermédiaire MP (ou modèle avec périoste). Si besoin, on applique un agent de démoulage sur la résine dans les zones de travail pour éviter l'adhérence avec le silicone et assurer une présence de liquide sur toute la surface de chaque zone de travail.

Cette structure intermédiaire MP est alors positionnée dans le premier moule MA, et on injecte le silicone simulant la muqueuse dans l'espace entre modèle MP et moule MA, par exemple par remplissage depuis un débouché arrière ou latéral.

### Matériaux

Les matériaux suivants ont été utilisés et conviennent à la mise en oeuvre de l'invention, de façon rapide et économique :
- Silicones pour moulage : FINOSIL H (prix: 73.15 €/litre et 80 cl/moule)
- Silicones pour périoste et muqueuse : même prix (12 cl/modèle)
- Thermoformeuse : marque Sheu (prix machine : 1850 €)
- Compresseur : Schneider Silentmaster 100-8-6W (prix : 315 €)
- (prix feuille à thermoformer, paquets de 50 : 81.30 € (1 plaque/moule)
- Fil de nylon du commerce (prix : 7 € pour 300 m) (1 m/modèle)
- Résine polyuréthane Axon : 34 €/litre (60 cl/modèle)
- Charge pour la résine (charge du commerce de type silice) : 8 €/500gr (4 gr/modèle)
- Tubulure avec connectique « luer-loc », produit Micro-Flo de chez Gaillard 0,28 € l'unité (5/modèle)

A titre d'évaluation des possibilités de performance en matière de rapidité obtenues par l'invention, les temps suivants ont été utilisés pour la mise en oeuvre :
- Moule pour la réalisation des silicones : 2 fois 4 mn par moule (moule réutilisable à volonté)
- Moule élastomère : 30s de spatulation, 20 minutes de prise (réutilisable à volonté)
- Mise en place du système d'irrigation plus précontrainte tube : 15 mn par modèle
- Coulée de la résine et spatulation : 3 mn (temps de prise environ 30 mn)
- Démoulage du modèle : 1,30 mn
- Préparation plus injection silicone périoste : 2 mn (temps de prise 10 mn)
- Démoulage : 20 s
- Préparation plus remplissage silicone périoste : 2,30 mn (temps de prise 10 mn)
- Démoulage plus ébavurage du modèle : 3 mn

Bien sûr, l'invention n'est pas limitée aux exemples qui viennent d'être décrits et de nombreux aménagements peuvent être apportés à ces exemples sans sortir du cadre de l'invention.

## Revendications

1. Dispositif (ME) d'entraînement médical ou dentaire simulant une partie du corps comprenant une surface osseuse sous-jacente à une peau ou une muqueuse, notamment une mâchoire, le dispositif présentant une ou plusieurs zones dite de travail (ZB) comprenant une structure de base (MT) recouverte par une couche souple (CA, CB) présentant une surface extérieure (CA) accessible à des moyens chirurgicaux, **caractérisé en ce qu'**il comprend des moyens (T, INJ) pour injecter entre la structure de base et la couche souple un liquide (SA) sous pression simulant un fluide biologique.

2. Dispositif selon la revendication précédente, **caractérisé en ce que** les moyens d'injection comprennent un canal (INJ) inclus dans la structure de base (MT) et aboutissant dans la zone de travail (ZB) entre la structure de base (MT) et la couche souple (CB), dans une zone où lesdites couches de base et couche souple ne sont pas adhérentes l'une à l'autre, la zone de travail étant entourée de façon continue d'une zone creuse (CH) dite tranchée formée dans la structure de base et remplie par un matériau attenant à la couche souple, formant ainsi une chicane d'étanchéité autour de ladite zone de travail et limitant les pertes de pression de ladite zone de travail vers une zone voisine non pressurisée.

3. Dispositif selon l'une quelconque des revendications précédentes, **caractérisé en ce qu'**il comprend une pluralité de zones de travail (ZB) étanches entre elles et reliées à au moins un dispositif d'arrivée de liquide (SA) sous pression, de façon à ce que l'une desdites zones de travail puisse être maintenue sous pression lorsqu'une incision (X) a déjà provoqué un écoulement (SA) dans une autre desdites zones de travail.

4. Dispositif (ME) selon l'une quelconque des revendications précédentes, **caractérisé en ce qu'**il simule en tout ou partie la forme d'une mâchoire et comprend au moins une zone de travail (ZB) irriguée sous pression s'étendant à la fois sur la face intérieure (Fint) et sur la face extérieure (Fext) d'une structure rigide (MT) simulant la mâchoire, ladite zone de travail comportant au moins une couche (CB) d'un matériau souple recouvrant ladite structure rigide, ladite couche souple comprenant une partie (P) traversant la structure rigide (MT) de façon à relier et maintenir entre eux au moins deux points de ladite couche souple (CB) dans ladite zone de travail situés de part et d'autre de ladite structure rigide.

5. Dispositif selon l'une quelconque des revendications précédentes, **caractérisé en ce que** la couche souple recouvrant la structure rigide comprend au moins deux sous-couches (CA et CB) de couleurs différentes et/ou de textures différentes.

6. Dispositif selon la revendication précédente, **caractérisé en ce que** les deux-sous couches ne sont pas adhérentes entre elles dans tout ou partie de la zone de travail, formant entre elles une zone d'interface communiquant avec la structure rigide par une ou plusieurs ouvertures.

7. Procédé de réalisation d'un outillage pour l'obtention d'un modèle d'entraînement (ME) à au moins une couche de travail (CA), **caractérisé en ce qu'**il comprend les étapes suivantes :
- à partir d'un modèle mâle (M0) présentant la forme extérieure dudit modèle d'entraînement (ME) à obtenir, réalisation (601) par moulage d'un premier moule (MA) ;
- réduction (602) par enlèvement de matière dudit modèle mâle (M0) ou d'un modèle obtenu à partir dudit premier moule (MA), dans au moins une zone (ZA) devant comporter ladite couche de travail (CA), d'une profondeur correspondant à l'épaisseur à obtenir pour ladite couche de travail (CA) ;
- à partir dudit modèle mâle réduit (M1), réalisation (603) par moulage d'un deuxième moule (MB) ; de façon à ce que la forme dudit premier moule (MA) puisse coopérer avec la forme dudit modèle mâle réduit une fois (M1) pour former un volume de moulage permettant de réaliser (703) ladite couche de travail (CA).

8. Procédé selon la revendication précédente permettant l'obtention d'un modèle d'entraînement à au moins deux couches de travail, dites extérieure (CA) et intérieure (CB), **caractérisé en ce qu'**il comprend en outre les étapes suivantes :
- réduction (604) par enlèvement de matière du modèle mâle réduit une fois (M1) ou d'un modèle obtenu à partir du deuxième moule (MB), dans au moins une zone (ZB) devant comporter une couche intérieure (CB), d'une profondeur correspondant à l'épaisseur à obtenir pour ladite couche intérieure (CB) ;
- à partir dudit modèle mâle réduit deux fois (M2), réalisation par moulage d'un troisième moule (MC) ; de façon à ce que :
- la forme dudit troisième moule (MC) permette de réaliser un modèle dit de travail (MT) ; et
- la forme dudit deuxième moule (MB) puisse coopérer avec la forme dudit modèle de travail (MT) pour former un volume de moulage permettant de réaliser (702) ladite couche intérieure (CB) ; et
- la forme du premier moule (MA) puisse alors coopérer avec la forme dudit modèle mâle réduit une fois (M1) ou avec un modèle de travail (MT) portant ladite couche intérieure (CB) pour former un volume de moulage permettant de réaliser (703) une couche de travail dite extérieure (CA).

9. Procédé selon l'une quelconque des revendications 7 à 8, **caractérisé en ce que** l'étape de réduction (604) du modèle réduit une fois (M1) en modèle réduit deux fois (M2) comprend en outre :
- une gravure d'au moins une tranchée (CH) entourant de façon continue au moins une zone de travail (ZB) destinée à être mise sous pression de liquide (SA), ladite tranchée réalisant lors de la réalisation (702) de la couche intérieure (CB) une chicane d'étanchéité autour de ladite zone de travail ; et
- au moins un perçage traversant le modèle de travail (MT) de part en part et se rejoignant en deux points de ladite zone de travail (ZB), ledit perçage réalisant lors du moulage de la couche intérieure (CB) une partie traversante (P) maintenant ladite couche intérieure (CB) plaquée contre I surface dudit modèle de travail.

10. Procédé selon la revendication 9, **caractérisé en ce qu'**au moins un perçage (P) relie deux points de la même tranchée d'étanchéité (CH).

11. Procédé selon l'une quelconque des revendications 8 à 10, **caractérisé en ce qu'**il comprend en outre un étape de fixation (606) au sein du troisième moule (MC) d'au moins un fil (N) relié à une extrémité (N1) à la surface d'au moins une zone de travail (ZB), et dont l'autre extrémité (N2) est insérée à l'intérieur d'une extrémité (T1) d'un tuyau (T) dont l'autre extrémité (T2) sort dudit troisième moule (MC) par une surface externe dite arrière située en dehors des zones de travail, lesdits tuyau (T) étant ainsi en partie noyé dans le modèle de travail (MT) lors de sa réalisation (701) et formant avec ledit fil (N) ainsi un conduit (INJ) d'apport de liquide (SA) à ladite zone de travail (ZB) après retrait dudit fil (N).
